# EUROPÄISCHE PATENTSCHRIFT

(11) **EP 1 041 358 B1**
(45) Veröffentlichungstag und Bekanntmachung des Hinweises auf die Patenterteilung: **31.08.2005**
(21) Anmeldenummer: 00106465.8
(22) Anmeldetag: 24.03.2000
(51) Int. Cl.: G01B 11/27

(54) **Fluchtungsmessanordnung mit schrägem Target**
Alignment measuring device with oblique target
Dispositif de mesure d'alignement avec une cible oblique

(30) Priorität: 29.03.1999 DE 19914300
(43) Veröffentlichungstag der Anmeldung: 04.10.2000
(73) Patentinhaber: Prüftechnik Dieter Busch AG, 85737 Ismaning (DE)
(72) Erfinder: Lysen, Heinrich, 85748 Garching (DE); Hermann, Michael, 78050 Villingen-Schwenningen (DE); Pfister, Florian, 81925 München (DE); Unger, Andreas, 85748 Garching (DE); Albrecht, Christian, 80935 München (DE); Lewis, Simon, 80687 München (DE); Wegener, Martin, 85551 Kirchheim (DE); Zorn,Georg, 86956 Schongau (DE)

(56) Entgegenhaltungen:
- US-A- 4 249 294

## Beschreibung

Die Erfindung betrifft eine Fluchtungsmessanordnung für die gegenseitige Axiallage von rotationssymmetrischen Gegenständen, insbesondere für die Radebenen von parallelachsig nebeneinander angeordneten Riemenscheiben, mit welcher ein axialer, ein azimutal oder ein elevationsmässig gerichteter Versatz solcher Gegenstände allein oder in Kombination erkannt werden kann.

Eine solche Fluchtungsmesseinrichtung ist bekannt aus der DE 3630902 A1. Diese sieht eine mit einer Messeinrichtung verbundene Tasteinrichtung vor, welche unter Zuhilfenahme einer Befestigungseinrichtung nach Art eines Dreibackenfutters und mittels Krallen eine definierte Positionierung der Messeinrichtung ermöglicht. Die Messung wird mittels der Tasteinrichtung im wesentlichen mit mechanischen Mitteln durchgeführt.
Der genannten Fluchtungsmesseinrichtung haftet der Nachteil an, dass sie für das Vermessen einer Axiallage von Gegenständen, deren Achsen zum Beispiel mehr als einen Meter voneinander entfernt sind, entweder sehr unhandlich sind oder wegen schwerkraftbedingter Durchbiegungen nicht mehr besonders genau sind. Durch die präzise mechanische Fertigung solcher Fluchtungsmesseinrichtungen entstehen auch vergleichsweise hohe Fertigungskosten. Eine entsprechende optische Einrichtung zeigt Figur 4 in der US-A-4,249,294.- Es ist Aufgabe der Erfindung, diese Nachteile zu mindern und eine kostengünstige Fluchtungsmesseinrichtung zu schaffen, mit welcher in bequemer Weise die Messung eines eventuell vorliegenden Versatzes von näher oder weiter auseinanderliegenden und im wesentlichen prallelachsigen Riemenscheiben oder ähnlicher Gegenstände ermöglicht wird.

Diese Aufgabe wird nach dem Anspruch 1 golöst.

Einerseits werden neuartige Haltevorrichtungen vorgesehen, mit welchen verschiedenartige Messmittel, im folgenden auch als Referenzeinrichtungen bezeichnet, an die genannten Gegenstände oder Riemenscheiben befestigt werden können. Andererseits ist vorgesehen, neuartige und im wesentlichen optische und/oder optoelektronische Messmittel vorzusehen, so dass auf die eher schwerfälligen mechanischen Messmittel verzichtet werden kann.

Die optischen oder optoelektronischen Messmittel lassen sich überschlägig klassifizieren in solche mit emittivem Charakter (Sender) und in solche in Form eines Empfängers (Target), wobei der Empfänger dazu vorgesehen und geeignet ist, die Positionen eines Auftreffortes eines ausgesandten Lichtstrahles auf diesem zu bestimmen. Eine dritte Klasse an optischen Messmitteln hat eher reflektiven Charakter, nach Art eines Spiegels, welcher bevorzugt im Strahlengang zwischen einem Sender und einem Target angebracht ist.

Die Details der Erfindung werden im folgenden anhand der Zeichnung beschrieben.
Es zeigt:
- Fig. 1: die Darstellung des allgemein zugrundeliegenden Messproblems, welches bereits grundlegend nach dem Stand der Technik bekannt ist
- Fig. 2: eine perspektivische und eine zugehörige Schnitt-Darstellung von zwei Riemenscheiben, an welche erfindungsgemässe Halterungen angebracht sind, mit denen verschiedene Messmittel oder Referenzeinrichtungen an die Riemenscheiben befestigt werden können
- Fig. 3: eine perspektivische Ansicht auf ein Messadapter-Paar, auf welchem eine Sendeeinrichtung und eine Empfangseinrichtung angebracht sind
- Fig. 4: eine perspektivische und transparente Darstellung einer anderen erfindungsgemässen Halterung für Messmittel oder Referenzeinrichtungen
- Fig. 5: eine Seitenansicht auf zwei Riemenscheiben und ein Messadapter-Paar mit einer anderen Kombination einer Sende- und einer Empfangseinrichtung
- Fig. 6: eine Darstellung von Licht-Auftreffpunkten auf ein Target
- Fig. 7: weitere Targets, mit Licht-Auftreffpunkten
- Fig. 8: die perspektivische Darstellung von zwei Targets nach Fig. 7, ebenfalls mit Licht-Auftreffpunkten

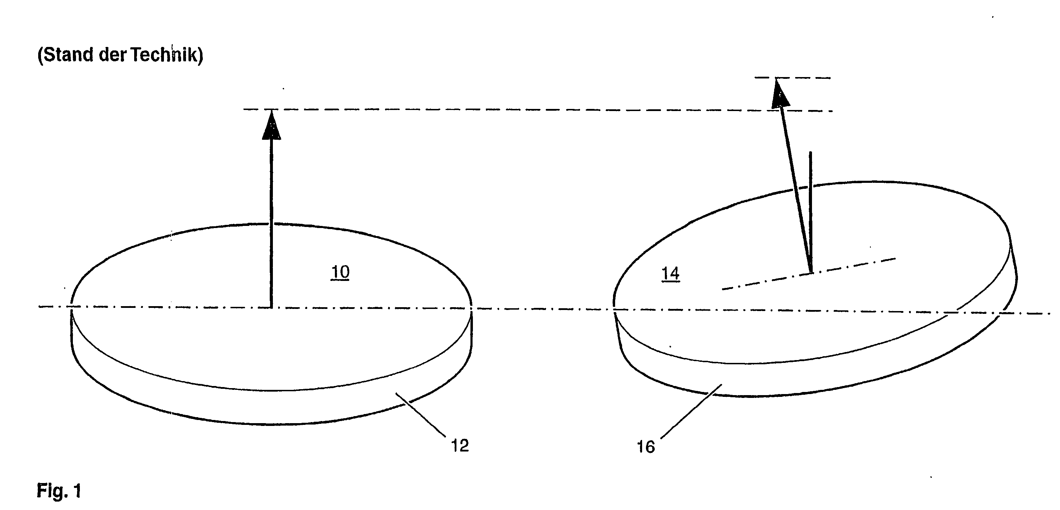

### Wie in Fig. 1 gezeigt, beruht das zu lösende Messproblem auf folgendem:

Zwei im wesentlichen zylinderförmige Gegenstande, wie zum Beispiel in Form von Riemenscheiben 10, 14, und die jeweils einen peripheren Zylindermantel 12, 16 aufweisen, deren Oberflächen nach Massgabe verwendeter Treibriemen bearbeitet sein kann, seien durch Flächen-Normalen charakterisiert, welche einen Bezugspunkt im Zentrum der Stirnseiten der Riemenscheiben treffen. Sind die Riemenscheiben 10,14 ideal zueinander angebracht, so liegen die genannten Stirnseiten auf einer Ebene, d.h. die gezeigten Normalen sind parallel ausgerichtet und die Bezugspunkte weisen keinen Höhenversatz auf. Fig. 1 zeigt in überhöhter Darstellung eine reale Situation, bei der die Riemenscheiben 10, 14 einen Versatz sowohl in axialer als auch in azimutaler und elevationsmäsiger Richtung aufweisen.

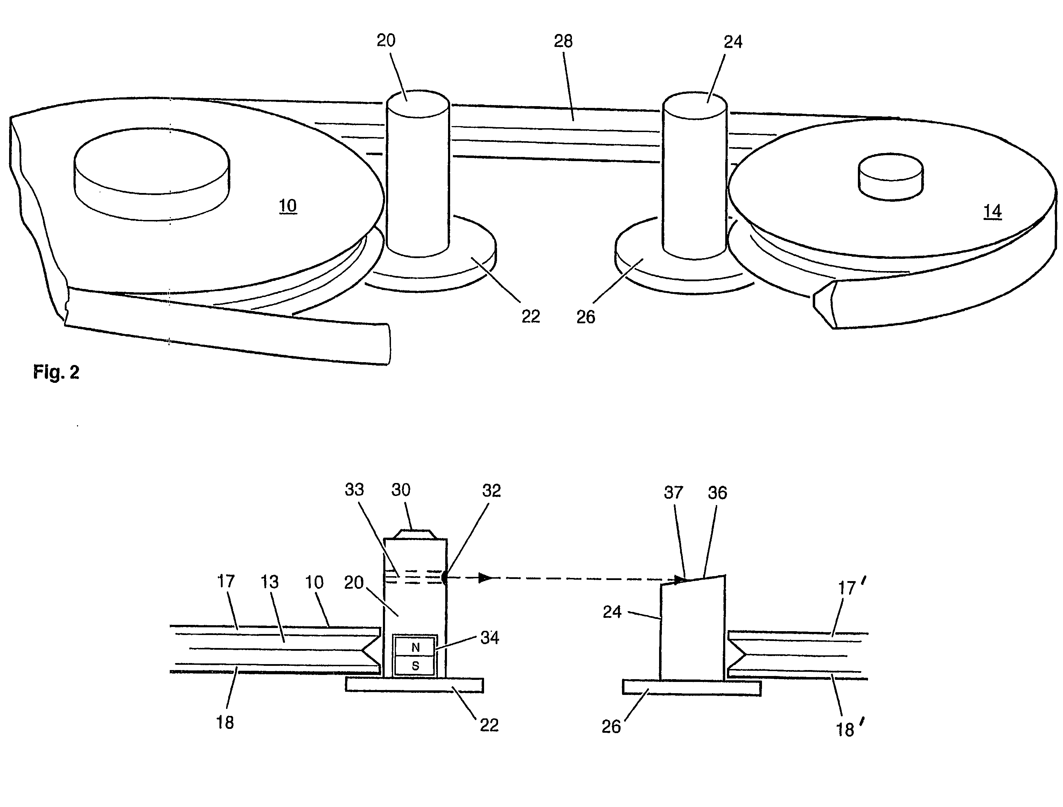

Wie in Fig. 2 ausgewiesen, werden zur Messung der genannten Abweichungen erfinungsgemässe Halterungen vorgesehen, welche einen präzise geschliffenen Grundkörper 20, 24 aufweisen. Damit können die Halterungen an die jeweilige Peripherie von Riemenscheiben 10, 14 angelegt werden, insbesondere in den winkelförmigen Freiraum zwischen Riemenscheibe und Riemen 28. Auf diese Weise kann bei Bedarf der Riemen 28 eine stützende Funktion ausüben. Die Grundkörper 20, 24 sind mit ebenfalls präzise hergestellten Anschlagscheiben 22 bzw. 26 in exakte Verbindung gebracht. Die Anschlagscheiben haben, wie aus der Zeichnung ersichtlich, den Zweck, in direkten und planen stirnseitigen Kontakt mit den Riemenscheiben zu treten. Bei vollständigem Kontakt können also die Lage-Werte einer Riemenscheibe an die gezeigte Haltevorrichtung präzise transferiert werden. Messmittel, welche an dieser befestigt sind, finden daher eine genaue Referenzposition vor. Ein Beispiel wird im unteren Teil der Fig. 2 gezeigt, wo Grundkörper 20 an zylindrischen Streifen 17, 18 anliegt, während Bezugsziffer 13 auf eine Nut für einen Keilriemen hinweist. Wie gezeigt, möge sich Anschlagscheibe 22 in Kontakt mit der unteren Stirnseite von Riemenscheibe 10 befinden. Zur Erzielung dieses Kontaktes kann ein Permanentmagnet 34 in den Grundkörper 20 (oder auch in die Anschlagscheibe 22) eingearbeitet sein, so dass eine vergleichsweise feste und genaue Kontaktierung gewährleistet wird. Weiterhin kann sich im Inneren des Grundkörpers 20 eine kollimativ wirkende Bohrung 33 befinden, oder eine lichtabgebende Vorrichtung nach Art einer Laserdiode, dern Licht durch eine Apertur 32 in Richtung der Riemenscheibe 14 abgestrahlt werden kann. Durch Bezugsziffer 30 wird ein Schalter symbolisiert, mit welchem die Laserdiode ein- bzw. ausgeschaltet werden kann. Der aus der Apertur 32 austretende Laserstrahl trifft auf eine schräg zur Rotationsachse des Grundkörpers 24 stehende Target-Fläche 36 auf und erzeugt dort einen Leuchtfleck 37, von z.B. elliptischer Form. Sind die Riemenscheiben 10, 14 ausgerichtet, so wird der Leuchtfleck 37 das Zentrum der Target-Fläche 36 treffen. Tut er dies nicht, so sind die Riemenscheiben nicht exakt aufeinander ausgerichtet. Auch die Kombination aus Grundkörper 24 und Anschlagscheibe 26 ist mit Vorteil mit einer permanentmagnetisch wirkenden Hafteinrichtung ausgestattet. In einer einfacheren Version ist diese Hafteinrichtung entbehrlich, und es wird nur die Klemmwirkung eines gespannten Keilriemens zur Befestigung der Halterung an die Riemenscheibe herangezogen.

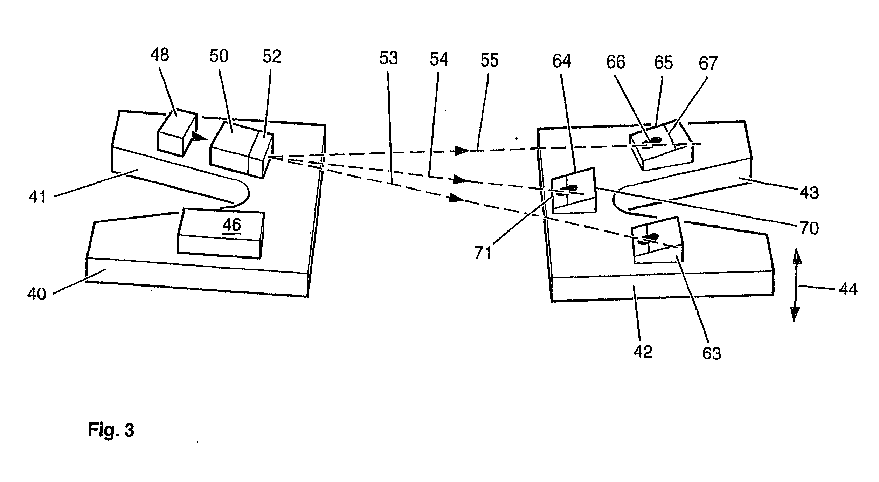

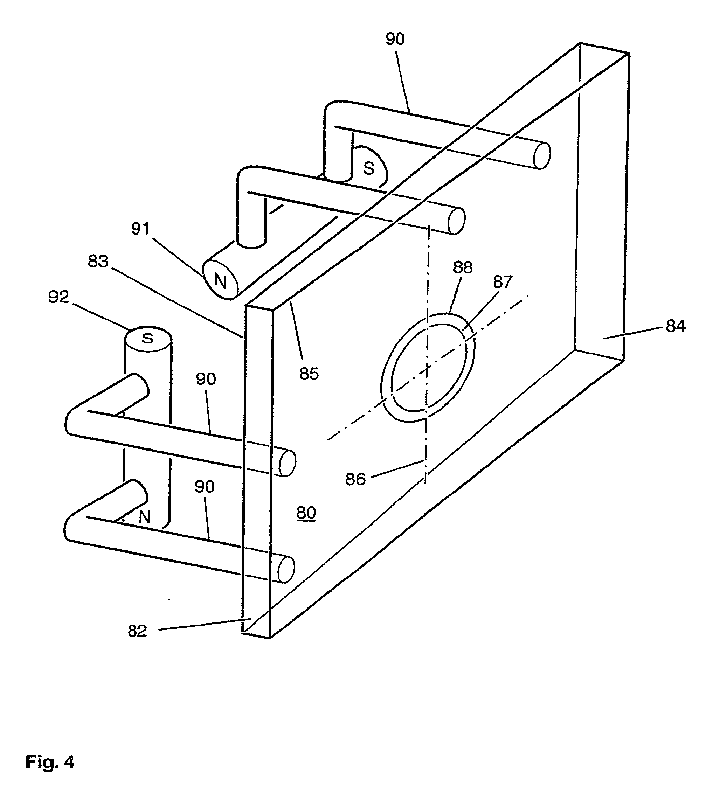

Die in Fig. 3 gezeigte Ausführungsform der Erfindung sieht andere Halterungen vor, nämlich im wesentlichen flächige Auflegescheiben 40, 42, welche mit Aussparungen 41 bzw. 43 versehen sind und plan auf die Stirnseiten eines Riemenscheiben-Paars oder dgl. aufgelegt werden (Riemenscheiben nicht gezeigt). Auch hier kann durch permanentmagnetisch wirkende Mittel (nicht gezeichnet) dafür gesorgt werden, dass die Auflegescheiben präzise und wiederabnehmbar an den Riemenscheiben befestigt werden können. Durch die Aussparungen 41, 43 kann man vermeiden, dass hervorstehende Befestigungsmuttern, Achsenden oder dgl. der Riemenscheiben das plane Auflegen der Auflegescheiben in Frage stellen.
Wesentliche Ergänzung zur Auflegescheibe 40 ist ein lichtemittierende Vorrichtung 48, z.B. eine Laser-Diode oder eine Leucht-Diode. Ein Kollimator 50 kann so vorgeschaltet werden, dass er einen schmalen Lichtstrahl ausblendet. Dieser Lichtstrahl wird durch einen Strahlteiler oder Strahlfächer 52 in eine Anzahl bzw. Vielzahl auf einer Ebene liegenden und somit flächig strahlenden Lichtstrahlen aufgefächert. Hierzu dient gemäss der Erfindung entweder eine exakt bezüglich der Auflegescheibe 40 montierte Zylinderlinse, oder eine geeignete diffraktive arbeitende flächige Optik, z.B. in Form eines Strichgitters oder eines Hologramms. Anstelle einer in Transmission arbeitenden diffraktiven Optik kann auch eine solche vorgesehen werden, die reflektiv arbeitet. Durch Bezugszeichen 46 wird eine geeignete Stromversorgung symbolisiert, z.B. eine Batterie oder Akkumulator, mit der die lichtemittierende Vorrichtung 48 gespeist wird. Die von dem Strahlteiler oder Strahlfächer ausgehenden Lichtstrahlen 53, 54, 55 treffen auf den Targets 63, 64 und 65 auf. Diese weisen eine abgeschzägte Oberfläche relativ zur Oberfläche der Auflegescheibe 42 auf, so dass die Seitenflächen 70, 71 in gezeigter Weise ungleich gross sind. Die Targets sind so dimensioniert, dass bei ideal ausgerichteten Riemenscheiben, und somit den Auflegescheiben 40, 42 , die Lichtstrahlen einen zentriert liegenden Leuchtfleck erzeugen. Bei Fehllage der Auflegescheibe, wie durch Doppelpfeil 44 symbolisiert, wandert z.B. der Leuchtfleck 66 von seiner Sollposition auf der Markierung 67 entweder nach vorne (in Richtung Strahlfächer 52) oder in die entgegengesetzte Richtung. Gleiches gilt für die Leuchtflecken, welche auf Targets 63 und 64 erzeugt werden. - Sofern aus dem Strahlfächer 52 flächenmässig verteilte Lichtstrahlen emittiert werden, verbreitert sich ein Leuchtfleck 66 zu einem Leucht-Band auf dem Target 65, usw. Durch die Lage der Leuchtflecke oder -bänder auf den Targets erhält eine Bedienperson also einen Hinweis auf eine eventuell vorhandene Fehllage der Riemenscheiben und kann anhand dieser Informationen korrigierend eingreifen.
Die Targets können auch mit einer weiteren Halterung an eine Riemenscheibe befestigt werden, wie in Fig. 4 gezeigt. Ein Target 80 ist ebenfalls abgeschrägt und weist unterschiedlich grosse Seitenflächen 82, 84 auf Ein ideal liegender Leuchtfleck 87 ist trifft mittig die Markierung 86 und liegt innerhalb der Markierungslinie 88. Das Target 80 ist über gebogene oder gewinkelte Verbindungsstege 90 mit permanentmagnetisch wirkenden Einlegekörpern 91, 92 verbunden. Diese sind so dimensioniert, dass sie in die V-Nut einer Riemenscheibe (nicht gezeigt) eingelegt werden können. Ihre Achsen treffen in einem Schnittpunkt unter einem vordefinierten Winkel auf.

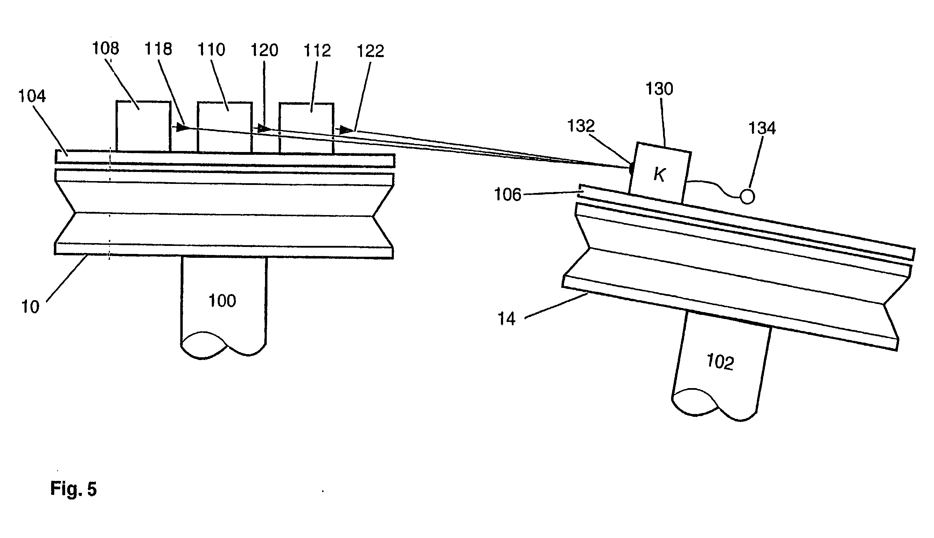

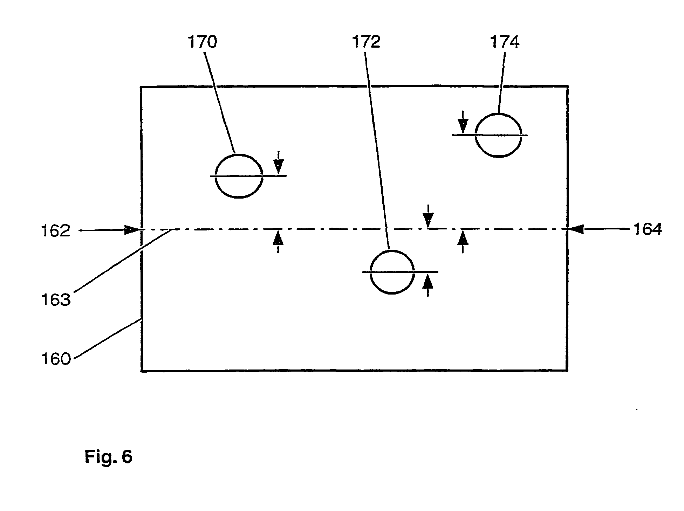

In weiterer Ausgestaltung der Erindung wird, wie in Fig. 5 gezeigt, eine Mehrzahl an beleuchtbaren oder lichtemittierenden Vorrichtungen 108, 110, 112 vorgesehen. Diese sind auf einer Auflage 104 montiert und können somit ebenfalls auf eine Stirnfläche einer Riemenscheibe 10 (mit Welle 100) oder dgl. exakt planparallel aufgelegt werden. Die Vorrichtungen 108, 110, 112 senden angenähert kegelförmig begrenzte Lichtstrahlen 118, 120, 122 in Richtung eines Empfängers 130 aus. Dieser ist auf einer anderen Auflage 106 montiert und sichtet mit seiner Empfangsapertur 132 die bei ihm ankommenden Lichtstrahlen 118, 120, 122. Auf diese Weise kann die räumliche Lage einer Riemenscheibe 14 (mit Welle 102) relativ zur Lage der Riemenscheibe 10 ermittelt werden, wie in Fig. 6 gezeigt. Mit der dortigen Bezugsziffer 160 ist eine optisch oder optoelektronisch wirkende Empfangsebene gekennzeichnet, welcher visuell oder elektronisch einblendbare Markierungspunkte 162, 164 oder eine Referenzlinie 163 zugeordnet sein können. Einfallende Lichtstrahlen 118, 120, 122 können mit einer Optik auf die Empfangsebene abgebildet werden oder direkt auf dieser sichtbar werden. Die Einfallsrichtung kann senkrecht zur Empfangsebene sein, oder unter einem flachen Winkel streifend. Die einfallenden Lichtstrahlen können unterschiedlicher Farbe sein und werden beispielsweise, bei nicht fluchtenden Riemenscheiben, gemäss Fig. 6 in Leuchtflecken 170, 172, 174 abgebildet, so dass sie von der Referenzlinie 163 entfernt sind.
Anhand der in Fig. 6 angedeuteten Entfernungen der Leuchtpunkte von der Referenzlinie kann eine Bedienperson, bevorzugt unter Verwendung von Computer-Mitteln, eine korrekte und fluchtende Ausrichtung der betreffenden Riemenscheiben 10, 14 durchführen.

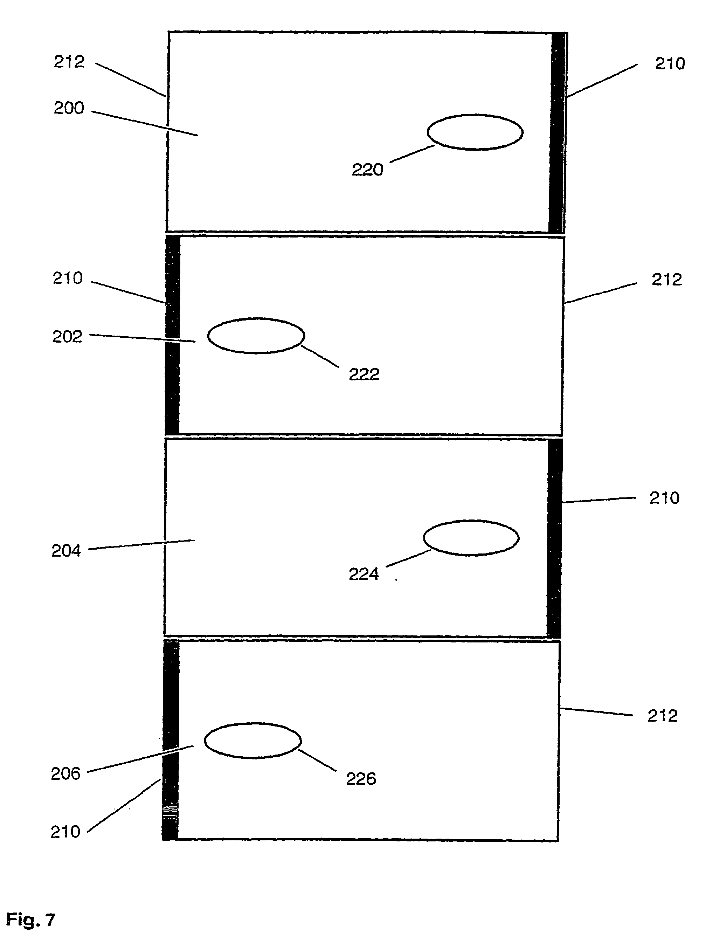

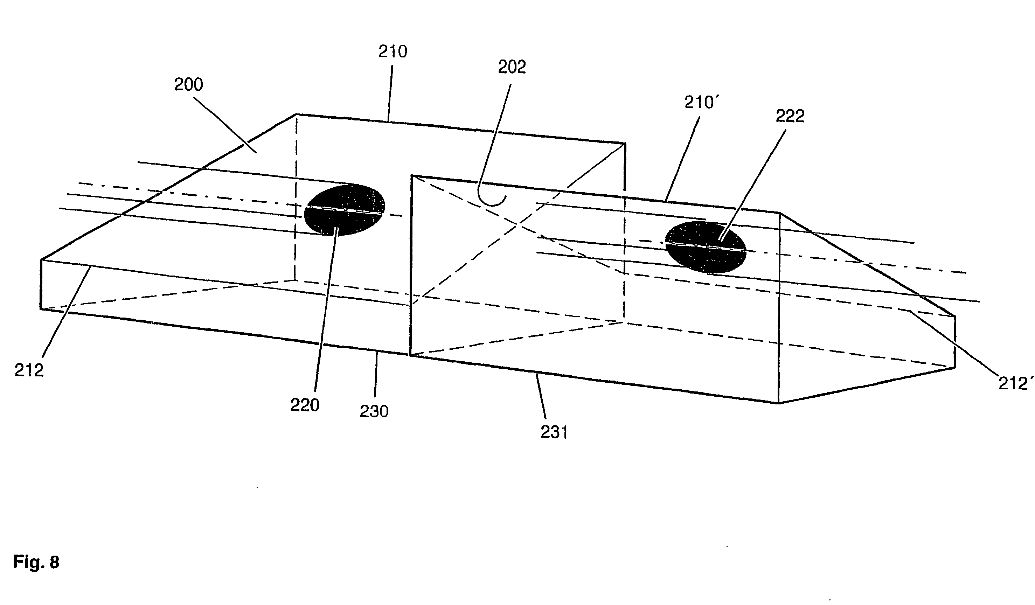

Eine bevorzugte Ausgestaltung der Targets aus Fig. 2,3,4 ist in Fig. 7 dargestellt, welche eine Aufsicht auf die Auftrefflächen für Lichstrahlen oder Lichtfächer auf visuell zu inspizierende Target-Flächen 200, 202, 204, 206 darstellt und deren nebeneinanderliegende Anordnung in Fig. 8 wiedergegeben ist. Die Leuchtflecken 220, 222, 224, 226 können von eher elliptischer Form sein (bei einzeln auftreffenden Lichtstrahlen schmalen Querschnitts), oder eher bandförmig sein (im Falle einer verwendeten Licht-Ebene), oder eine sonstig vordefinierte Form aufweisen. Bezugszeichen 210, 212 weisen auf tieferliegende bzw. höherliegende Kanten der schräggestellten Auftrefflächen hin (vgl. Fig. 8). Aufgrund der wechselweise höher- bzw. tieferliegenden Kanten kann eine Beleuchtung der Auftrefflächen entweder von unten, und in transparenter Projektionsweise, erfolgen, oder aber von der Oberseite her mittels einer direkten Projektion. Bei korrekter Lage einer einfallenden Strahl-Schar ergeben sich zentral auf den Auftrefflächen liegende Leuchtflecken oder -bänder, so dass sie linear nebeneinander (untereinander) angeordnet erscheinen. Im gezeichneten, nicht fluchtenden Fall, liegen die Leuchtflecken zickzackförmig nebeneinander und weisen schon bei direkter visueller Betrachtung auch auf eine relativ kleine Fehllage einer flächig einfallenden Lichtstrahlschar hin.
Zu diesem Zweck ist vorgesehen, dass die Neigung einer einzelnen Einfallfläche gegenüber der Stirnfläche einer Riemenscheibe ca. 1:20 beträgt. Diese Zusammenhänge werden noch einmal in Fig. 8 in perspektivischer Darstellung wiedergegeben. Man erkennt, dass Leuchtfleck 220 auf Target 230 in direkter Projektion sichtbar gemacht wird, zum Beispiel durch Auftreffen auf eine mit Titandioxid beschichtete Auftreffläche 200, deren Vorderkante 212 tiefergelegt ist, im Vergleich zur höherliegenden Hinterkante 210. Im Gegensatz dazu ist beim angereihten Target 231 die vordere Kante 210' höhergelegt, während die hintere Kante 212' tieferliegt. Das Target 231 ist entweder offen oder aus einem transparenten Material gefertigt, so dass ein entsprechender Lichtstrahl auf die Unterseite von Auftreffläche 202 fällt, welche zumindest durchscheinend ist, so dass der entstehende Leuchtfleck 222 visuell von oben her beobachtet werden kann. Zur Vereinfachung der Herstellung der Targets wird jedoch vorgeschlagen, diese einheitlich zu gestalten und die Auftrefflächen 200, 202 entweder für direkte oder aber transparente Projektion einer leuchtenden Fläche 220, 222 zu nutzen.

## Patentansprüche

1. Fluchtungsmessanordnung *zum Vermessen der* gegenseitigen *Orientierung* von rotationssymmetrischen Gegenständen, insbesondere der *gegenseitigen Orientierung* von nebeneinander angeordneten Riemenscheiben (10, 14), zum Erkennen eines Parallelversatzes solcher Gegenstände in Achsrichtung, oder zum Erkennen eines Winkelversatzes in Azimutal- oder in Elevationsrichtung, mit mindestens einer einen Lichtstrahl (53, 54, 55) aussendenden ersten Referenzeinrichtung (20, 50) und mit mindestens einer zweiten Referenzeinrichtung (24,42), welche den Lichtstrahl empfängt und Positionen des Auftreffortes (37, 66) des Lichtstrahles auf dieser zu erkennen gestattet,
wobei die zweite Referenzeinrichtung mindestens eine als Target dienende Zielfläche (36, 63, 64, 65, 80, 200, 202, 204, 206) aufweist, welche so orientiert ist bzw. sind, dass der mindestens eine Lichtstrahl unter einem kleinen Einfallswinkel auf die Zielfläche auftrifft.

2. Fluchtungsmesseinrichtung nach Anspruch 1, mit einer zusätzlichen, als Reflektor dienenden dritten Referenzeinrichtung, welche im Strahlengang zwischen der genannten ersten und zweiten Referenzanordnung angebracht ist.

## Claims

1. Alignment measurement arrangement *for measurement of the* mutual *orientation* of rotational symmetrical objects, in particular of the *mutual orientation* of pulley discs (10, 14) which are arranged alongside one another, in order to identify any parallel offset of such objects in the axial direction, or in order to identify any angular offset in the azimuth direction or in the elevation direction, having at least one first reference device (20, 50) which emits a light beam (53, 54, 55), and having at least one second reference device (24, 42), which receives the light beam and allows positions of the hit location (37, 66) of the light beam on it to be identified,
with the second reference device having at least one target surface (36, 63, 64, 65, 80, 200, 202, 204, 206) which act(s) as a target, and is or are oriented such that the at least one light beam strikes the target surface at a small incidence angle.

2. Alignment measurement device according to Claim 1, having an additional, third reference device, which is used as a reflector and is fitted in the beam path between the said first and second reference arrangements.

## Revendications

1. Dispositif de mesure d'alignement pour mesurer l'orientation mutuelle d'objets à symétrie de révolution, notamment l'orientation mutuelle de poulies à courroies (10, 14) disposées l'une à côté de l'autre, en vue de mettre en évidence un décalage parallèle de tels objets dans la direction axiale, ou en vue de mettre en évidence un décalage angulaire dans la direction azimutale ou en élévation, comprenant au moins un premier dispositif de référence (20, 50) émettant un faisceau lumineux (53, 54, 55) et au moins un deuxième dispositif de référence (24, 42) qui reçoit le faisceau lumineux et permet de mettre en évidence des positions de la zone d'incidence (37, 66) du faisceau lumineux sur celui-ci, le deuxième dispositif de référence présentant au moins une surface cible (36, 63, 64, 65, 80, 200, 202, 204, 206) servant de cible qui est ou qui sont orientées de telle sorte que l'au moins un faisceau lumineux frappe la surface cible suivant un petit angle d'incidence.

2. Dispositif de mesure d'alignement selon la revendication 1, comprenant un troisième dispositif de référence supplémentaire, servant de réflecteur, qui est monté dans la trajectoire du faisceau entre lesdits premier et deuxième agencements de référence.
